# EUROPÄISCHE PATENTANMELDUNG

(11) **EP 1 983 158 A1**
(43) Veröffentlichungstag der Anmeldung: **22.10.2008**
(21) Anmeldenummer: 07008037.9
(22) Anmeldetag: 20.04.2007
(51) Int. Cl.: F01D 5/00, F01D 25/00, G06F 17/18

(54) **Verfahren zur Bewertung von geplanten Wartungszeitpunkten einer Strömungsmaschine sowie Leitsystem für eine Strömungsmaschine**

(71) Anmelder: SIEMENS AKTIENGESELLSCHAFT, 80333 München (DE)
(72) Erfinder: Werner, Klaus, Dr., 47574 Goch (DE)

(57) **Zusammenfassung**

Die Erfindung betrifft ein Verfahren zur Bewertung von geplanten Wartungszeitpunkten einer Strömungsmaschine, in der bei fortgeführtem Betrieb durch eine zunehmende Verschmutzung ein zunehmender, aber eliminierbarer Verlust eintreten kann. Ferner betrifft die Erfindung ein Leitsystem für eine Strömungsmaschine mit einer Auswerteeinheit und mit einer Anzeigeeinheit. Um eine Bewertung von geplanten Wartungszeitpunkten einer Strömungsmaschine zu ermitteln, fließen zuvor erhaltene Messwerte eines Betriebsparameters über die Höhe der Rückgewinnung aufgrund einer an dieser oder an zumindest einer vergleichbaren Strömungsmaschine durchgeführten reinigenden Wartung in eine Regressionsanalyse (30) ein, welche daraus zum Bewerten des geplanten Wartungszeitpunkts für diesen die Höhe der Rückgewinnung mit einer zugehörigen Eintrittswahrscheinlichkeit ableitet und diese Werte in einer Anzeigeeinheit darstellt (50).

## Beschreibung

Die Erfindung betrifft ein Verfahren zur Bewertung von geplanten Wartungszeitpunkten einer Strömungsmaschine, in der bei fortgeführtem Betrieb durch eine zunehmende Verschmutzung ein zunehmender, aber eliminierbarer Verlust eintreten kann. Des Weiteren betrifft die Erfindung ein Leitsystem für eine Strömungsmaschine mit einer Auswerteeinheit und mit einer Anzeigeeinheit.

Gasturbinen und deren Wirkungsweise sind allgemein bekannt. Bei stationären Gasturbinen werden im Allgemeinen Maßnahmen getroffen, um die angesaugte Umgebungsluft nach Möglichkeit in besonders reiner Form zu verdichten. Hierzu sind im Strömungsweg der angesaugten Luft mehrstufige Filter vorgesehen, welche die aus der Umgebungsluft mitgeführten Partikel und Schwebeteilchen herausfiltern sollen. Die von der Luft mitgeführten Partikel, welche jedoch durch den vorgeschalteten Filter gelangt sind, können sich trotz der hohen Strömungsgeschwindigkeiten im Verdichter auf den Schaufeln ablagern und ansammeln. Dies führt bei fortgesetztem Betrieb der Gasturbine in der Regel zu erheblichen Verschmutzungen der Schaufeln des Verdichters. Auch treten Verdichterverschmutzungen stärker in einer staub- oder sandreichen Umgebung auf. Insgesamt stellt sich die Verschmutzung als Ablagerungen auf den Schaufelblättern des Verdichters dar. Durch die steigende Konzentration der Verunreinigungen auf den Schaufeln besteht die Gefahr der Bildung aggressiver Laugen oder Säuren. Diese können zu Korrosion führen und unter Umständen durch Bildung von Lochfraß die Schwingungseigenschaften der Schaufeln negativ beeinflussen. Außerdem führen die Ablagerungen zu Strömungsverlusten im Verdichter und somit zu einem Leistungsverlust, der mit zunehmender Verschmutzung ansteigt.

Um den verschmutzungsbedingten Leistungsverlust zu vermindern, sind unterschiedliche Reinigungsverfahren bekannt. Dabei werden in Abhängigkeit der Verschmutzungen der Verdichterschaufeln sowie der Verschmutzungsintensität überwiegend nasse Reinigungsverfahren durchgeführt. Hierunter ist zu verstehen, dass in dem Verdichter Wasser, gegebenenfalls mit einem geeigneten Detergentium, eingedüst wird. Dabei kann unterschieden werden zwischen einer so genannten Offline-Wäsche und einer Online-Wäsche des Verdichters. Die Offline-Wäsche wird während einer Betriebsunterbrechung der Gasturbine durchgeführt und die Online-Wäsche erfolgt während des Betriebs der Gasturbine. Die Online-Wäsche reinigt im Wesentlichen die vorderen Schaufeln des Verdichters, da im hinteren Bereich aufgrund der dort entstehenden Reibungswärme das Wasser verdampft. Hierdurch wird aber auch der von den vorderen Verdichterschaufeln entfernte Schmutz teilweise wieder auf den hinteren Stufen deponiert. Aufgrund dieser Tatsache kann mit dieser Methode der Wirkungsgrad des Verdichters bzw. der Gasturbine in der Regel nur begrenzt wiederhergestellt werden, so dass nach mehrmaliger Anwendung der Online-Wäsche eine Betriebsunterbrechung der Gasturbine mit anschließender Offline-Verdichterwaschung erforderlich ist.

Bei der Offline-Verdichterwaschung wird der Rotor mit Hilfe einer Antriebsvorrichtung auf Drehzahlen weit unter dem Auslegungswert beschleunigt und anschließend Wasser in die Verdichterbeschaufelung eingespritzt. Dabei kann dem Wasser auch noch ein Reinigungsmittel untergemischt sein. Um möglichst viele Stufen des Verdichters mit der Offline-Verdichterwäsche reinigen zu können, ist es erforderlich, dass im hinteren Teil des Verdichters die Verdampfung des Wassers verhindert wird und dementsprechend ist es erforderlich, dass die Verdichterwäsche erst nach einer bestimmten Ruhezeit nach dem letztmaligen Betrieb der Gasturbine durchgeführt wird, was im Allgemeinen die Verfügbarkeit der Gasturbine reduziert und somit die Stromentstehungskosten erhöht.

Ausgehend davon hat jeder Betreiber einer stationären Gasturbine das Bestreben, vergleichsweise selten eine Offline-Verdichterwäsche durchzuführen. Je seltener aber eine Offline-Verdichterwäsche durchführt wird, umso größer ist jeweils der sich durch Verschmutzung einstellende Leistungsverlust. Betreiber wägen daher die Kosten für die Verdichterreinigung und die Stillstandszeit mit den Kosten für den erhöhten Brennstoffbedarf und den Leistungsverlust gegeneinander ab, um anschließend den Wartungszeitpunkt, an dem die Offline-Verdichterwäsche durchgeführt werden soll, zu bestimmen.

Aufgabe der Erfindung ist die Bereitstellung eines Verfahrens zur Bewertung von geplanten Wartungszeitpunkten einer Strömungsmaschine, in der bei fortgeführtem Betrieb durch eine zunehmende Verschmutzung ein zunehmender, aber eliminierbarer Verlust eintreten kann.

Weitere Aufgabe der Erfindung ist die Angabe eines Leitsystems für eine Strömungsmaschine mit einer Auswerteeinheit und einer Anzeigeeinheit, auf welcher das Verfahren zur Bewertung von geplanten Wartungszeitpunkten einer Strömungsmaschine durchführbar ist.

Die auf das Verfahren bezogene Aufgabe wird durch ein Verfahren gemäß den Merkmalen des Anspruchs 1 und die auf das Leitsystem bezogene Aufgabe wird durch ein Leitsystem mit den Merkmalen des Anspruchs 11 gelöst.

Gemäß dem erfindungsgemäßen Verfahren ist es vorgesehen, dass die beim Betrieb der Strömungsmaschine zuvor erhaltenen Messwerte eines Betriebsparameters über die Höhe der Rückgewinnung aufgrund einer an dieser oder an zumindest einer vergleichbaren Strömungsmaschine durchgeführten reinigenden Wartung in eine Regressionsanalyse einfließen, aus der zur Bewertung des geplanten Wartungszeitpunkts für diesen die Höhe der Rückgewinnung, welche sich durch die zu einem geplanten Zeitpunkt vorgesehene Wartung einstellen kann, mit einer Eintrittswahrscheinlichkeit abgeleitet wird.

Der Erfindung liegt die Erkenntnis zugrunde, dass die durch die Wartung herbeiführbare Rückgewinnung an Leistung nicht immer hundertprozentig eintritt. Dies kann in nicht systematischen Einflüssen begründet sein. Dementsprechend kann trotz einiger Erfahrungswerte nicht immer zuverlässig angegeben werden, ob die für einen Wartungszeitpunkt vorbestimmte Rückgewinnung auch tatsächlich eintritt.

Die Erfindung schlägt daher vor, dass mit Hilfe einer Regressionsanalyse, welche sich auf zuvor erhaltene Messwerte eines Betriebsparameters über die Höhe einer Rückgewinnung aufgrund einer an dieser (oder an zumindest einer vergleichbaren) Strömungsmaschine durchgeführten reinigenden Wartung stützt, Werte ermittelt werden. Die Werte stellen dabei die Höhe der Rückgewinnung und die Eintrittswahrscheinlichkeit über die Höhe der Rückgewinnung für einen vorgesehenen Wartungszeitpunkt dar. Dementsprechend kann mit Hilfe statistischer Methoden aus den zuvor erhaltenen Messwerten Vorhersagen für den Rückgewinn abgeleitet werden, die zur Bewertung mit einer bestimmten Eintrittswahrscheinlichkeit verknüpft sind. Dementsprechend hat der Betreiber einer Strömungsmaschine nicht nur die Möglichkeit, den Wartungszeitpunkt anhand eines möglichen Rückgewinns festzulegen, sondern er kann die Festlegung auch anhand der Eintrittswahrscheinlichkeit die vorberechnete Höhe der Rückgewinnung abwägen. Dementsprechend kann seine Entscheidung auf weitergehende Informationen gestützt werden als nur auf die Vorhersage über einen möglichen Rückgewinn.

Erfindungsgemäß ist das Leitsystem für eine Strömungsmaschine, welche eine Auswerteeinheit und eine Anzeigeeinheit umfasst, in der Lage, durch die Auswerteeinheit eine durch eine reinigende Wirkung der Strömungsmaschine herbeiführbare Höhe der Rückgewinnung eines sich zuvor eingestellten Verlusts mit einer Eintrittswahrscheinlichkeit zu ermitteln, wobei die ermittelte Höhe der Rückgewinnung und deren Eintrittswahrscheinlichkeit von der Anzeigeeinheit einem Betreiber der Strömungsmaschine digital oder graphisch anzeigbar ist.

Vorteilhafte Ausgestaltungen der Erfindung sind in den Unteransprüchen angegeben.

Vorzugsweise wird für mehrere unterschiedliche geplante Zeitpunkte der Wartung jeweils die korrespondierende Höhe der Rückgewinnung mit einer dazu gehörenden Eintrittswahrscheinlichkeit bestimmt. Aufgrund der Berechnung von mehreren Zeitpunkten für eine Wartung können mehrere Zeitpunkte untereinander verglichen werden. Es kann beispielsweise möglich sein, dass für einen ersten Zeitpunkt die Höhe des Rückgewinns von beispielsweise einem Prozent Verdichterwirkungsgrad nach 1000 Betriebsstunden (Operating Hours: OH) mit einer Eintrittswahrscheinlichkeit von 50% ermittelt wird und für einen zweiten Zeitpunkt mit 1200 Betriebsstunden der gleiche Rückgewinn bei nur geringfügig verbesserter Eintrittswahrscheinlichkeit von 55% sich einstellen würde. Dementsprechend ist der erstgenannte Zeitpunkt für den Betreiber der Gasturbine als besser einzustufen als der zweitgenannte Zeitpunkt.

In einer weiteren vorteilhaften Ausgestaltung der Erfindung werden für einen der geplanten Wartungszeitpunkte mehrere Höhen an Rückgewinnung mit unterschiedlichen Eintrittswahrscheinlichkeiten bestimmt. Auch hierdurch ist der Betreiber der Strömungsmaschine in der Lage, die unterschiedlichen Zahlenpaare miteinander zu vergleichen und in Relation zu setzen, um anhand dieser Daten und anhand der vorgegebenen Randbedingungen, wie beispielsweise momentan vorhandener Wirkungsgrad der Strömungsmaschine und Brennstoffpreis, über den Wartungszeitpunkt der Strömungsmaschine zu entscheiden.

Vorzugsweise werden zur Bestimmung der Höhe der Rückgewinnung durch die Regressionsanalyse diejenigen Messwerte in diese einfließen, welche unmittelbar vor und unmittelbar nach der Wartung bzw. den Wartungen an der Strömungsmaschine selber bzw. an vergleichbaren Strömungsmaschinen erfasst worden sind. Um eine besonders große statistische Grundgesamtheit der Regressionsanalyse zugrunde legen zu können, fließen nach Möglichkeit nicht nur diejenigen Messwerte in die Regressionsanalyse ein, welche an der betreffenden Strömungsmaschine erfasst worden sind, sondern auch diejenigen Messwerte, welche an vergleichbaren Strömungsmaschinen, wie zum Beispiel baugleiche Strömungsmaschinen desselben Herstellers, erfasst worden sind. Aufgrund einer umfangsreicheren Grundgesamtheit kann eine exaktere Angabe für die Höhe der Rückgewinnung und deren zugehörige Eintrittswahrscheinlichkeit für einen vorgesehenen Wartungszeitpunkt ermittelt werden.

Gemäß einem bevorzugten Verfahren werden die zuvor erfassten Messwerte des Betriebsparameters, bezogen auf den Zeitpunkt der durchgeführten Wartung, über einen Zeitraum von mindestens einem Betriebstag vor und von mindestens einem Betriebstag nach der Wartung gemittelt. Hierdurch werden Extremwerte des Betriebsparameters eliminiert, welche als Ausreißer innerhalb einer statistischen Analyse die Genauigkeit der Statistik lediglich verfälschen würden. Besonders bevorzugt ist das Verfahren, bei dem die zuvor erfassten Messwerte des Betriebsparameters, bezogen auf den Zeitpunkt der durchgeführten Wartung, über einen Zeitraum von mindestens fünf Betriebstagen vor und von mindestens fünf Betriebstagen nach der Wartung gemittelt werden. Mit den jeweiligen Messwerten der Betriebsparameter wird auch die Anzahl der Betriebsstunden der Strömungsmaschine miterfasst, welche seit der letztmaligen Wartung angefallen sind.

Insbesondere hierdurch kann eine besonders homogene Datenbasis für die Regressionsanalyse erhalten werden. Es fließen bevorzugtermaßen nur diejenigen Messwerte in die Regressionsanalyse gemittelt ein, die während des einen Betriebstags (resp. fünf Betriebstagen) vor und eines Betriebstags (resp. fünf Betriebstagen) nach der Wartung erfasst worden sind und an denen die Strömungsmaschine im Nennlastbetrieb war. Dies ist insbesondere für stationäre Turbomaschinen und Gasturbinen von großer Bedeutung, da diese in der Regel für Nennbetrieb optimiert und ausgelegt worden sind. Außerdem kann dadurch die Höhe der Rückgewinnung auf einen definierten Betriebspunkt, nämlich auf den Nennlastbetrieb, bezogen werden.

Vorzugsweise wird das Verfahren für eine Strömungsmaschine mit einem daran angekoppelten elektrischen Generator durchgeführt. Dabei handelt es sich bei der Strömungsmaschine vorzugsweise um eine stationäre Gasturbine. Die Rückgewinnung kann dann für den Wirkungsgrad des Generators (η_{KL}), für die Steigerung der Leistungsabgabe des Generators (ΔP_{KL}), für den Wirkungsgrad des Verdichters der Gasturbine und/oder für die Leistungssteigerung der Gasturbine abgeleitet werden. Da für den Betreiber des Kraftwerks insbesondere nur die an der Klemme des Generators abgreifbare elektrische Leistung bzw. die Steigerung der Leistungsabgabe das ausschlaggebende Kriterium ist, ist dieser derjenige Betriebsparameter, der zur Entscheidung über den geplanten Wartungszeitpunkt herangezogen wird. Dementsprechend wird die Berechnung über die Höhe der Rückgewinnung für einen dieser Parameter vorzugsweise durchgeführt.

In einer bevorzugten Ausgestaltung der Erfindung kann als Wartung eine Offline-Reinigung des Verdichters oder ein Wechsel eines der Gasturbine vorgeschalteten Luftfilters vorgesehen sein bzw. durchgeführt werden. Das Verfahren ist folglich insbesondere für diejenigen Wartungen von besonderem Interesse, durch die ein sich beim Betrieb der Gasturbine bzw. des Verdichters einstellender Verschleiß bzw. Verlust an Leistung vergleichsweise einfach, zumindest teilweise, eliminiert werden kann. Dies gilt einerseits für die Offline-Reinigung des Verdichters bzw. der Verdichterbeschaufelung, an der sich Schmutzpartikel ablagern können und andererseits für einen sich während des Betriebs der Gasturbine zusetzenden Luftfilters, an dem bei steigendem Verschmutzungsgrad ein ansteigender Druckverlust sich einstellen kann.

Besonders vorteilhaft ist das Verfahren, bei dem die Höhe der Rückgewinnung durch eine Kontrollrechnung verifiziert wird, in welche der polytrope Verdichterwirkungsgrad (η_{VP}) der Strömungsmaschine, die Massenstromdifferenz (Δ*ṁ_{Vi}*) der Strömungsmaschine, die tatsächliche Klemmleistung eines an diesen angekoppelten Generators und/oder der Filterdruckverlust der Strömungsmaschine vor einer Wartung und nach einer Wartung einfließen. Bei durch den Betrieb zunehmender Verschmutzung der Verdichterbeschaufelung ändert sich nämlich sowohl der Verdichtermassenstrom der Gasturbine als auch der polytrope Verdichterwirkungsgrad. Ebenso ändert sich der Verdichtermassenstrom der Gasturbine und der polytrope Verdichterwirkungsgrad bei sich zusetzendem Filter, so dass beide vorgenannten Größen in eine Kontrollrechnung einfließen können. Gleichfalls ist die von der Gasturbine an den elektrischen Generator abgebbare Leistung direkt vom Massenstrom der Gasturbine abhängig. Aufgrund des Einflusses dieser Größen auf die Leistungsabgabe bzw. Wirkungsgrad können diese zu einer Kontrollrechnung herangezogen werden. Es ist vorgesehen, dass sowohl der tatsächliche polytrope Verdichterwirkungsgrad als auch der tatsächliche Massenstrom, welche jeweils von unmittelbar vor einer Wartung bekannt sind, ins Verhältnis zu ihren Nennwerten gesetzt werden. Jede der sich daraus ergebenden Prozentzahlen wird mit einer speziellen, maschinentypabhängigen Konstante multipliziert, wobei die Produkte anschließend aufsummiert werden. Die Konstante spiegelt dabei den Einfluss des polytropen Verdichterwirkungsgrads resp. den Einfluss des Massenstroms auf die Ausgangsleistung wider. Stellt sich dabei heraus, dass die Summe kleiner ist als der durch die Regressionsanalyse ermittelte Leistungsgewinn am Generator, kann festgehalten werden, dass der durch die Regressionsanalyse bestimmte Leistungsrückgewinn zu groß und somit zu optimistisch bestimmt worden ist. Dementsprechend wird dann als Höhe der Rückgewinnung der durch die von der Kontrollrechnung erhaltene Wert von der Auswerteeinheit ausgewählt und von der Anzeigeeinheit angezeigt.

Die auf die Vorrichtung bezogene Aufgabe wird durch ein Leitsystem für eine Strömungsmaschine gelöst, welche mit einer Auswerteeinheit und einer Anzeigeeinheit ausgestattet ist, wobei durch die Auswerteeinheit eine durch eine reinigende Wartung der Strömungsmaschine herbeiführbare Höhe der Rückgewinnung eines sich zuvor eingestellten Verlusts aufgrund einer Verschmutzung der Strömungsmaschine mit einer Eintrittswahrscheinlichkeit ermittelbar ist, wobei die ermittelte Höhe der Rückgewinnung und deren Eintrittswahrscheinlichkeit von der Anzeigeeinheit einem Betreiber der Strömungsmaschine digital oder graphisch anzeigbar ist. Insbesondere mit der graphischen Darstellung der ermittelten Höhe der Rückgewinnung ist der Betreiber der Strömungsmaschine vergleichsweise einfach in der Lage, unterschiedliche Wartungszeitpunkte miteinander zu vergleichen. Beispielsweise kann eine Sättigung in der Höhe der Rückgewinnung vergleichsweise einfach in einer graphischen Darstellung erkannt werden, so dass der Beginn der Sättigung einen bevorzugten Zeitpunkt für eine Wartung darstellt. Wartungszeitpunkte nach dem Eintritt der Sättigung der Höhe der Rückgewinnung für eine gegebene Eintrittswahrscheinlichkeit sind somit als nachteilig einzustufen.

In einem besonderen vorteilhaften Leitsystem ist auf dessen Auswerteeinheit das Verfahren nach einem der Ansprüche 1 bis 10 durchführbar.

In einer besonders bevorzugten Ausgestaltung der Erfindung ist auf der Auswerteeinheit des Leitsystems das Verfahren nach den Ansprüchen 1, 2 und 3 durchführbar, wobei die Anzeigeeinheit zur Bewertung von Wartungszeitpunkten dem Betreiber eine Schar von Kurven in einem Rückgewinnungs-Zeit-Diagramm darstellt, wobei jede Kurve eine konstante Eintrittswahrscheinlichkeit angibt.

Insbesondere hierdurch lassen sich vorgenannte Vergleiche von unterschiedlichen Wartungszeitpunkten besonders einfach durchführen, um einen bestmöglichen Wartungszeitpunkt, auch im Hinblick auf die vorhandenen Brennstoffkosten, vom Betreiber der Strömungsmaschine ermitteln zu können.

Die Erfindung wird anhand einer Zeichnung erläutert.

Es zeigen:
- FIG 1: ein Rückgewinnungs-Zeit-Diagramm für eine Strömungsmaschine,
- FIG 2: ein Rückgewinnungs-Eintrittswahrscheinlichkeits-Diagramm,
- FIG 3: ein Ablaufdiagramm für das erfindungsgemäße Verfahren und
- FIG 4: eine tabellarische Darstellung von Leistungsrückgewinnungen in Abhängigkeit eines möglichen Wartungszeitpunktes und einer Eintrittswahrscheinlichkeit.

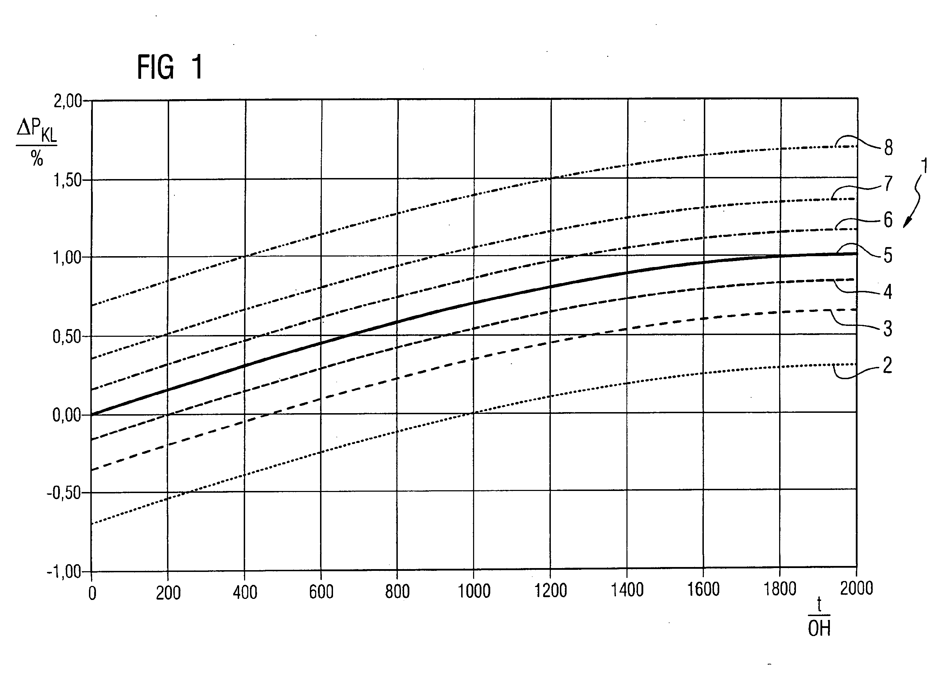

FIG 1 zeigt ein Rückgewinnungs-Zeit-Diagramm 1, bei dem als Parameter die Eintrittswahrscheinlichkeit der Vorhersage verwendet ist.

Auf der Abszisse (X-Achse) sind die Betriebsstunden (OH) der Strömungsmaschine, im vorliegenden Fall einer Gasturbine mit einem daran angekoppelten elektrischen Generator, aufgetragen. Der Ursprung der Abszisse stellt den Zeitpunkt der letzten Offline-Verdichterwäsche dar. Auf der Ordinate (Y-Achse) ist die Höhe der Rückgewinnung in Prozent der so genannten Klemmen-Ausgangsleistung des Generators dargestellt. Bezugsgröße ist folglich die elektrische Leistung des Generators, welcher an seiner Klemme abgegriffen werden kann. Im dargestellten Beispiel wird die Höhe der Rückgewinnung in Prozent angegeben, bezogen auf die Nennklemmleistung des Generators (P_{KL}).

In dem Diagramm 1 gemäß FIG 1 ist eine Schar von Kurven von insgesamt sieben Kurven 2 - 8 gezeigt. Jede Kurve ist für ein vorbestimmtes festes Vertrauensinterwall (Eintrittswahrscheinlichkeit) berechnet worden. Die Berechnung dieser Kurven 2 - 8 basiert auf zuvor erhaltene Messwerte über die Höhe der Leistungsrückgewinnung eines Betriebsparameters (hier: Klemmleistung des Generators), welche Rückgewinnung sich aufgrund an der Gasturbine (oder an zumindest einer vergleichbaren Gasturbine) durchgeführten reinigenden Wartung erhalten wurden. Eine Regressionsanalyse nutzt diese, zuvor erhaltenen Messwerte, um daraus die Datenbasis für das in FIG 1 gezeigte Diagramm 1 zu ermitteln.

Die insgesamt sieben Kurven 2 - 8 sind dabei mit unterschiedlichen Linienarten im Diagramm dargestellt.

Die den Kurven 2 - 8 zugrunde liegenden Zahlenreihen wurden durch die Ausführung des erfindungsgemäßen Verfahrens mittels einer Regressionsanalyse abgeleitet. Dabei wird für mehrere unterschiedliche geplante Zeitpunkte der Wartung - dargestellt als unterschiedliche Betriebsstunden seit der letzten Wartung - jeweils die korrespondierende Höhe der Rückgewinnung mit einer dazugehörigen Eintrittswahrscheinlichkeit bestimmt. Ebenso wurden für einen definierten geplanten Wartungszeitpunkt unterschiedliche Höhen an Rückgewinnung mit unterschiedlichen Eintrittswahrscheinlichkeiten von 5% (Kurve 2) bis 95% (Kurve 8) bestimmt, so dass insgesamt die in FIG 1 gezeigte Darstellung von einem erfindungsgemäßen Leitsystem einem Betreiber der Gasturbine anzeigbar ist.

Aus der Neigung der einzelnen Kurven 2 - 8 und deren asymptotischen Verlauf ab ungefähr 1800 Betriebsstunden (OH) ist ersichtlich, dass eine reinigende Wartung der Strömungsmaschine vorzugsweise vor dem Erreichen der 1800sten Betriebsstunde der Strömungsmaschine seit der letztmaligen Wartung recht sinnvoll erscheint. Aufgrund der ab dem Zeitpunkt von 1800 Betriebsstunden sich einstellenden Kurvenverläufe - annähernd parallel zur Abszisse - ist ersichtlich, dass eine wesentlich gesteigerte Höhe an Rückgewinnung nicht erreichbar ist, so wie es im Bereich zwischen 400 Betriebsstunden und 1200 Betriebsstunden der Fall ist. Dem zur Folge ist spätestens 1800 Betriebsstunden nach der letzten Wartung die nächste Wartung durchzuführen.

Je nach dem, welche weiteren Randbedingungen ein Betreiber der Gasturbine vorfindet, beispielsweise der aktuelle Brennstoffpreis, ist er mit Hilfe der in FIG 1 dargestellten Graphik in der Lage, die unterschiedlichen Wartungszeitpunkte noch besser miteinander zu vergleichen. Die systematische Bewertung der Höhe der Rückgewinnung durch die Angabe einer jeweils zugehörigen Eintrittswahrscheinlichkeit dient dem Betreiber der Gasturbine als Entscheidungsgrundlage, wann er beispielsweise eine Offline-Wäsche des zur Gasturbine zugehörigen Verdichters durchführen kann und welche Leistungsvorteile sich wahrscheinlich einstellen werden.

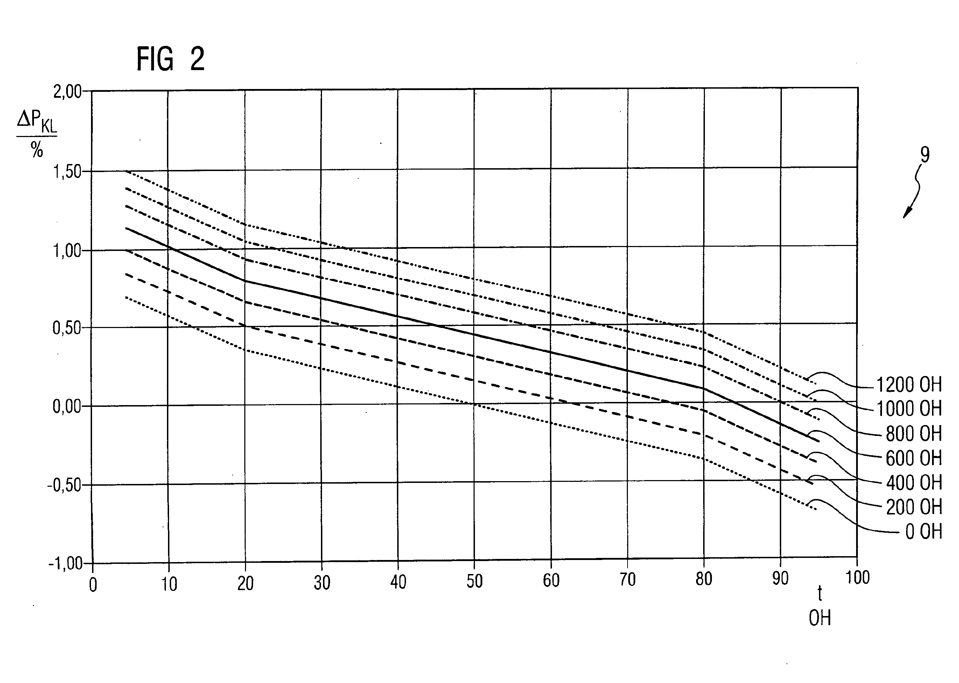

Eine zur FIG 1 alternative Darstellung der in derselben Regressionsanalyse ermittelten Datenbasis zeigt FIG 2 als ein Rückgewinnungs-Eintrittswahrscheinlichkeits-Diagramm 9. Anstelle der Betriebsstunden sind in der Abszisse die Eintrittswahrscheinlichkeiten der Rückgewinnungen aufgeführt. Dementsprechend ist als Parameter für die Kurvenschar aus insgesamt sieben Kurven die Betriebsstunden der Gasturbine verwendet worden.

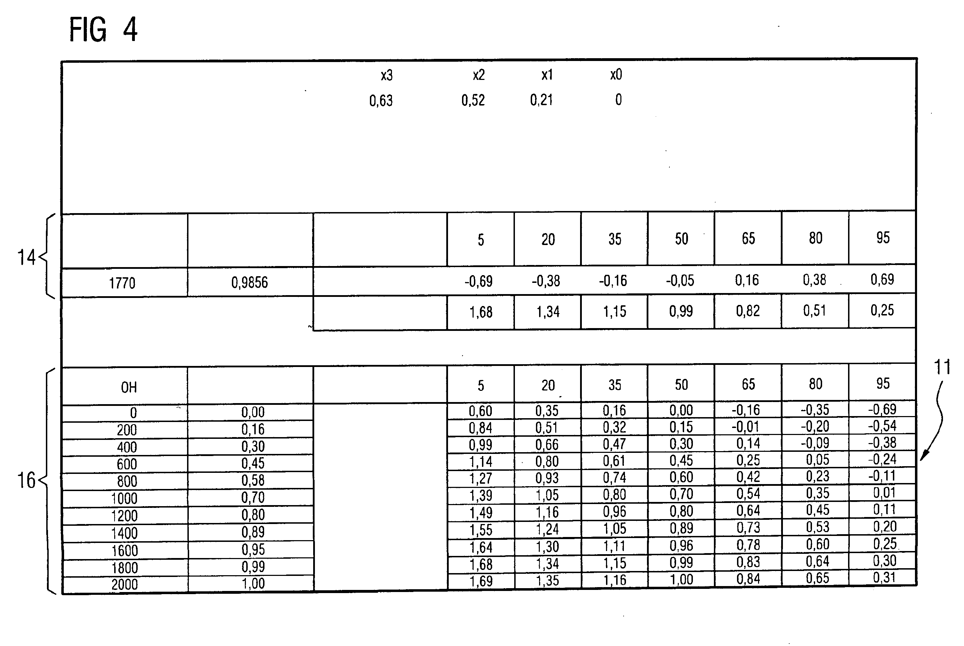

Die Datenbasis der Graphiken zu FIG 1 und FIG 2 ist in FIG 4 ersichtlich. Hier sind in textueller Form 11 die aus der Regressionsanalyse ermittelten Zahlenwerte von der Anzeigeeinheit dargestellt, welche die Bewertungen von unterschiedlichen Wartungszeitpunkten der Gasturbine von der Anzeigeeinheit bezeichnen.

Die Kurvenverläufe 2 - 8 werden anhand eines Polynoms errechnet, dessen Koeffizienten x3, x2, x1, x0 aus den zuvor erhaltenen Messwerten des Betriebsparameters ermittelt wurden. Mittels des Polynoms kann für eine beliebige Anzahl von Betriebsstunden nach der letzten Wartung die Höhe der Rückgewinnung ermittelt werden.

In einem ersten Abschnitt 14 der Darstellung 11 kann eine beliebige Anzahl von Betriebsstunden in der ersten Spalte eingeben werden, woraus das Leitsystem die zugehörige Hohe der Rückgewinnung (zweite Spalte) für eine vorbestimmte Eintrittswahrscheinlichkeit ermitteln kann. In den nachfolgenden Spalten sind für die Eintrittswahrscheinlichkeiten von 5%, 20%, 35%, 50%, 65%, 80% und 95% die zugehörigen Höhen an Rückgewinnung angegeben.

In einem zweiten Abschnitt 16 sind die für die Kurvendarstellung gemäß FIG 1 und FIG 2 erforderlichen Daten tabellarisch dargestellt.

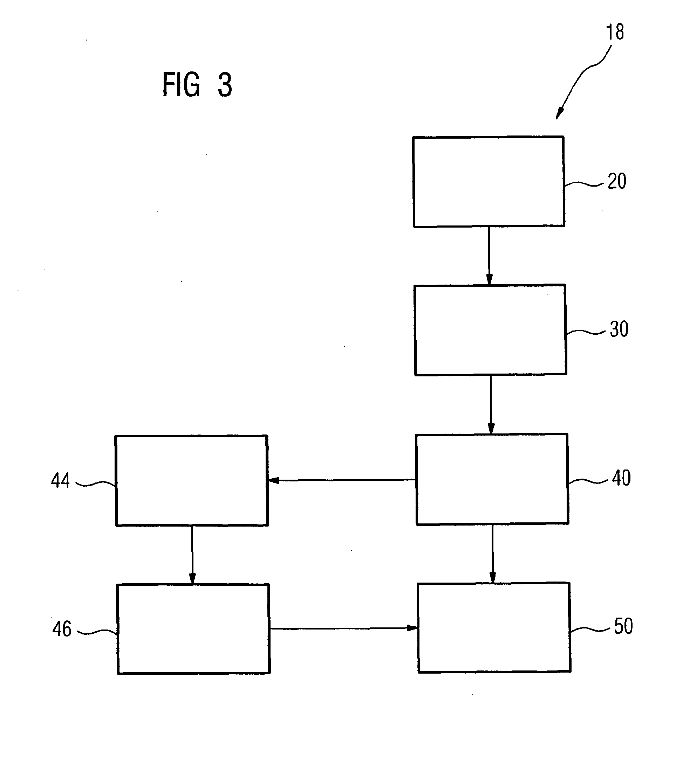

In FIG 3 ist das erfindungsgemäße Verfahren 18 zur Bewertung von geplanten Wartungszeitpunkten einer Strömungsmaschine schematisch dargestellt. In einem ersten Schritt 20 werden Messwerte eines Betriebsparameters der Strömungsmaschine erfasst, die über die Höhe der Rückgewinnung aufgrund einer an dieser oder an zumindest einer vergleichbaren Strömungsmaschine durchgeführten reinigenden Wartung erzielt worden sind. Dabei werden diejenigen Messwerte gesammelt, welche unmittelbar vor und unmittelbar nach jeder Wartung an der Strömungsmaschine bzw. an der vergleichbaren Strömungsmaschine erfasst worden sind. Bei der Verwendung einer stationären Gasturbine als Strömungsmaschine werden vorzugsweise die Betriebsparameter herangezogen bzw. die Messwerte von Betriebsparametern herangezogen, welche während eines Nennlastbetriebs der Gasturbine erhalten worden sind.

Um eine möglichst exakte Aussage über die Höhe der Rückgewinnung erhalten zu können, die aufgrund einer Wartung sich einstellte, werden die Messwerte über den Zeitraum von mindestens einem Tag vor und von mindestens einem Betriebstag nach der Wartung gemittelt. Besonders genau und von einzelnen seltenen Ergebnissen bereinigt, werden gemittelte Messwerte gesammelt und der Regressionsanalyse zugrunde gelegt, welche über einen Zeitraum von mindestens fünf Betriebstagen vor und von mindestens fünf Betriebstagen nach der Wartung erfasst worden sind. Hierdurch kann auch eine besonders große und verlässliche Datenbasis erhalten werden, auf welche sich die Regressionsanalyse stützt und welche in diese einfließen.

Das erfindungsgemäße Verfahren umfasst einen zweiten Schritt 30, in dem die gesammelten Messwerte bzw. Daten von einer Regressionsanalyse zu einer Angabe über die Höhe der Rückgewinnung mit einer dazugehörigen Eintrittswahrscheinlichkeit für einen zukünftigen Wartungszeitpunkt verarbeitet werden. Aufgrund mehrerer durchgeführter Wartungen an der betreffenden Gasturbine bzw. an einer vergleichbaren Gasturbine sieht das erfindungsgemäße Verfahren vor, dass die Regressionsanalyse nicht nur für einen Zeitpunkt die Höhe der Rückgewinnung mit einer dazugehörigen Eintrittswahrscheinlichkeit bestimmt, sondern für mehrere unterschiedliche geplante Zeitpunkte die jeweils zugehörige Höhe der Rückgewinnung mit einer dazugehörigen Eintrittswahrscheinlichkeit bestimmt. Vorzugsweise werden während des zweiten Schritts 30 für einen geplanten Wartungszeitpunkt mehrere Höhen an Rückgewinnung mit unterschiedlichen Eintrittswahrscheinlichkeiten bestimmt.

Aus der Regressionsanalyse geht somit ein Satz von Daten, genannt Datenbasis, hervor, welcher in einem dritten Schritt 40 des Verfahrens einem Betreiber der Gasturbine die Entscheidung über den Wartungszeitpunkt ermöglicht.

Die aus der Regressionsanalyse gewonnenen Daten können in einem vierten Verfahrensschritt 50 sowohl tabellarisch als auch graphisch dargestellt werden, wobei in einer graphischen Darstellung die in FIG 2 gezeigte Variante bevorzugt verwendet wird. Die Darstellung erfolgt dabei in einem Leitsystem der Gasturbine, deren Auswerteeinheit auf die zuvor erhaltenen Messwerte zugreifen kann, mittels der die Regressionsanalyse die Datenbasis erhalten und deren Anzeigeeinheit die unterschiedlichen Kurven in dem vorgenannten Diagramm anzeigen kann.

Mit Hilfe der dargestellten Graphik ist der Betreiber der Gasturbine in der Lage, den für ihn bestmöglichen Zeitpunkt zur Wartung der Gasturbine zu ermitteln, um diese dann zum vorgegebenen Zeitpunkt umzusetzen bzw. durchzuführen. Vorzugsweise handelt es sich bei der Wartung um eine Verdichter-Offline-Wäsche oder um den Austausch eines Filters, welcher sich im Ansaugbereich der Gasturbine befindet.

Die Genauigkeit der aus der Regressionsanalyse hervorgegangenen Daten kann dabei mittels einer oder mehrerer Kontrollrechnung überprüft und gegebenenfalls korrigiert werden. Dafür ist zwischen dem dritten Arbeitsschritt 40 und dem vierten Arbeitsschritt 50 mindestens ein weiterer Arbeitsschritt 44, 46 einzufügen. In dieser weiteren Ausgestaltung der Erfindung wird die sich durch die Wartung einstellende Rückgewinnung mittels einer thermodynamischen Kontrollrechnung evaluiert. Die Höhe der Rückgewinnung kann nämlich im Wesentlichen nur aufgrund der Änderungen des polytropen Verdichter-Wirkungsgrades und aufgrund der Änderungen des Massenstroms der Strömungsmaschine hervorgerufen werden. Dementsprechend fließen beide vorgenannten Parameter in die Kontrollrechnung 44 ein, wobei die Differenz des Massenstroms der Gasturbine von vor der Wartung und nach der Wartung zu ihrem Nennwert ins Verhältnis gesetzt wird. Hieraus ergibt sich ein Prozentwert. Für den polytropen Verdichterwirkungsgrad wird ein gleichartiger Prozentwert ermittelt. Diese Prozentwerte werden jeweils mit einer maschinentypabhängigen Konstante multipliziert. Beide Produkte werden anschließend aufsummiert und stelle als Ergebnis die thermodynamisch maximale Leistungsrückgewinnung dar, welche durch die Wartung herbeiführbar ist. Ist die thermodynamisch maximale Leistungsrückgewinnung kleiner als die in der Regressionsanalyse ermittelte Höhe der Rückgewinnung, so wird in einem Korrekturschritt 46 die dem Betreiber zur Verfügung gestellte tabellarische oder auch graphische Höhe der Rückgewinnung auf die thermodynamisch mögliche Größe reduziert.

Insbesondere durch die Verwendung der Kontrollrechnung kann dem Betreiber eine möglichst exakte und genaue Angabe bereitgestellt werden, mit welchen geänderten Leistungsdaten er die Strömungsmaschine nach der durchgeführten Wartung wahrscheinlich betreiben kann.

## Patentansprüche

1. Verfahren (18) zur Bewertung von geplanten Wartungszeitpunkten einer Strömungsmaschine,
in der bei fortgeführtem Betrieb durch eine zunehmende Verschmutzung ein zunehmender, aber eliminierbarer Verlust eintreten kann,
bei dem die zuvor erhaltenen Messwerte eines Betriebsparameters über die Höhe der Rückgewinnung aufgrund einer an dieser oder an zumindest einer vergleichbaren Strömungsmaschine durchgeführten reinigenden Wartung in
eine Regressionsanalyse (30) einfließen,
aus der zur Bewertung des geplanten Wartungszeitpunkts für diesen die Höhe der Rückgewinnung, welche sich durch die zu einem geplanten Zeitpunkt vorgesehene Wartung einstellen kann, mit einer Eintrittswahrscheinlichkeit abgeleitet wird.

2. Verfahren (18) nach Anspruch 1,
bei dem für mehrere unterschiedliche geplante Zeitpunkte der Wartung jeweils die korrespondierende Höhe der Rückgewinnung mit einer dazugehörenden Eintrittswahrscheinlichkeit bestimmt wird.

3. Verfahren (18) nach Anspruch 1 oder 2,
bei dem für einen der geplanten Wartungszeitpunkte mehrere Höhen an Rückgewinnung mit unterschiedlichen Eintrittswahrscheinlichkeiten bestimmt werden.

4. Verfahren (18) nach Anspruch 1, 2 oder 3,
bei dem zur Bestimmung der Höhe der Rückgewinnung durch die Regressionsanalyse diejenigen Messwerte in diese einfließen, welche unmittelbar vor und unmittelbar nach der Wartung bzw. den Wartungen an der Strömungsmaschine bzw. an den vergleichbaren Strömungsmaschinen erfasst werden.

5. Verfahren (18) nach einem der vorangehenden Ansprüche, bei dem die zuvor erfassten Messwerte des Betriebsparameters,
bezogen auf den Zeitpunkt einer durchgeführten Wartung, über einen Zeitraum von mindestens einem Betriebstag vor und von mindestens einem Betriebstag nach der Wartung gemittelt werden.

6. Verfahren (18) nach Anspruch 5,
bei dem die zuvor erfassten Messwerte des Betriebsparameters,
bezogen auf den Zeitpunkt der durchgeführten Wartung, über einen Zeitraum von mindestens fünf Betriebstagen vor und von mindestens fünf Betriebstagen nach der Wartung, gemittelt werden.

7. Verfahren (18) nach einem der vorangehenden Ansprüche, bei dem die Höhe der Rückgewinnung
für den Wirkungsgrad eines an die Strömungsmaschine angeschlossenen elektrischen Generators (η_{KL}),
für die Steigerung der Leistungsabgabe eines an die Strömungsmaschine angeschlossenen elektrischen Generators (P_{KL}) ,
für den Wirkungsgrad eines Verdichters und/oder
für die Leistungssteigerung einer Gasturbine abgeleitet werden bzw. wird.

8. Verfahren (18) nach einem der vorangehenden Ansprüche, bei dem als Wartung eine Offline-Reinigung des Verdichters oder ein Wechsel eines der Gasturbine vorgeschalteten Luftfilters vorgesehen ist bzw. durchgeführt wird.

9. Verfahren (18) nach einem der vorangehenden Ansprüche, bei dem die Höhe der Rückgewinnung durch eine Kontrollrechnung (44) verifiziert wird,
in welche der polytrope Verdichterwirkungsgrad (η_{VP}) der Strömungsmaschine,
die Massenstromdifferenz (Δ*ṁᵥᵢ*) der Strömungsmaschine,
die tatsächliche Klemmleistung eines an der Strömungsmaschine angeschlossenen elektrischen Generators und/oder
der Filterdruckverlust der Strömungsmaschine
von vor und nach einer Wartung einfließen.

10. Verfahren nach Anspruch 9,
bei dem als Höhe der Rückgewinnung der durch die Kontrollrechnung (44) erhaltene Wert angezeigt wird, sofern dieser kleiner ist als der durch die Regressionsanalyse ermittelte Höhe der Rückgewinnung.

11. Leitsystem für eine Strömungsmaschine,
mit einer Auswerteeinheit und mit einer Anzeigeeinheit,
wobei durch die Auswerteeinheit eine durch eine reinigende Wartung der Strömungsmaschine herbeiführbare Höhe der Rückgewinnung eines sich zuvor eingestellten Verlusts aufgrund einer Verschmutzung der Strömungsmaschine mit einer Eintrittswahrscheinlichkeit ermittelbar ist,
wobei die ermittelte Höhe der Rückgewinnung und deren Eintrittswahrscheinlichkeit von der Anzeigeeinheit einem Betreiber der Strömungsmaschine digital oder graphisch anzeigbar ist.

12. Leitsystem nach Anspruch 11,
auf dessen Auswerteeinheit das Verfahren (18) nach einem der Ansprüche 1 bis 10 durchführbar ist.

13. Leitsystem nach Anspruch 12,
auf dessen Auswerteeinheit das Verfahren (18) nach den Ansprüchen 1, 2 und 3 durchführbar ist und
dessen Anzeigeeinheit zur Bewertung von Wartungszeitpunkten dem Betreiber eine Schar von Kurven (2 - 8) in einem Rückgewinnungs-Zeit-Diagramm (1) darstellt,
wobei jede Kurve (2 - 8) eine konstante Eintrittswahrscheinlichkeit angibt.
